Europäisches Patentamt

European Patent Office

Office européen des brevets

(19)

(11) Veröffentlichungsnummer: **0 216 214 B1**

(12) **EUROPÄISCHE PATENTSCHRIFT**

(45) Veröffentlichungstag der Patentschrift: 08.05.91

(51) Int. Cl.⁵: **H04L 12/44**, H04B 10/12

(21) Anmeldenummer: 86112172.1

(22) Anmeldetag: 03.09.86

(54) **Verfahren zum automatischen Pegelabgleich in einem lokalen Netz, insbesondere für eine Mehrrechneranordnung, mit einem Bussystem mit Lichtwellenleitern, zum Zwecke einer Kollisionserkennung.**

(30) Priorität: 25.09.85 DE 3534207

(43) Veröffentlichungstag der Anmeldung:
01.04.87 Patentblatt 87/14

(45) Bekanntmachung des Hinweises auf die
Patenterteilung:
08.05.91 Patentblatt 91/19

(84) Benannte Vertragsstaaten:
AT BE CH DE FR GB IT LI LU NL SE

(56) Entgegenhaltungen:
EP-A- 0 113 231
WO-A-84/04638
BE-A- 901 897
DE-A- 3 224 425
GB-A- 2 120 893

PATENT ABSTRACTS OF JAPAN, Band 8, Nr.
78 (E-237)[1515], 10. April 1984; & JP-A-59 236
(MITSUBISHI DENKI K.K.) 05-01-1984

(73) Patentinhaber: **Siemens Aktiengesellschaft**
**Wittelsbacherplatz 2**
**W-8000 München 2(DE)**

(72) Erfinder: **Thinschmidt, Hans, Dipl.-Ing.(FH)**
**Kreuzlingerstrasse 52c**
**W-8034 Germering(DE)**
Erfinder: **Kurfess, Franz**
**Lindenstrasse 1**
**W-7906 Blaustein(DE)**

**Beschreibung**

Die vorliegende Erfindung bezieht sich auf ein Verfahren zum automatischen Pegelabgleich in einem lokalen Netz, insbesondere für eine Mehrrechneranordnung, mit einem Bussystem mit Lichtwellenleitern und einem optischen Sternkoppler, zum Einstellen eines normierten Pegels an allen Eingängen dieses Sternkopplers zum Zwecke einer Kollisionserkennung, wobei das zu übertragende Informationssignal durch einen elektrooptischen Sender in ein Lichtsignal umgewandelt und dieses in einen Lichtwellenleiter eingekoppelt wird, wobei das über Lichtwellenleiter übertragene Lichtsignal durch einen optoelektrischen Empfänger in ein elektrisches Nutzsignal umgewandelt und aus diesem das Informationssignal wiedergewonnen wird, wobei für jeden Knoten, beispielsweise ein Rechner, jeweils ein Sender vorgesehen ist, dessen in den Lichtwellenleiter eingekoppelte von dem Informationssignal abhängige Lichtleistung in digitalen Schritten änderbar ist, und wobei für jeden Knoten jeweils ein aus gleichstromgekoppelten Verstärkern ohne Verstärkungsregelung aufgebauter Empfänger vorgesehen ist, der eine Eingangsstufe zur Erzeugung des Nutzsignals, eine erste Komparatorstufe zur Erzeugung des Informationssignals aus dem Nutzsignal und eine zweite Komparatorstufe aufweist, der eine in digitalen Stufen änderbare Referenzspannung zugeführt wird, die den Pegel des Nutzsignals abtastet und ein Kollisionssignal abgibt, wenn das Nutzsignal die Referenzspannung übersteigt.

Aus der DE-A-3 224 425 ist bereits ein Bussystem mit Lichtwellenleitern bekannt, bei dem das zu übertragende Informationssignal durch einen elektrooptischen Sender in ein Lichtsignal umgewandelt und dieses in einen Lichtwellenleiter eingekoppelt wird und bei dem das über Lichtwellenleiter übertragene Lichtsignal durch einen optoelektrischen Empfänger in ein elektrisches Nutzsignal umgewandelt und aus diesem das Informationssignal wiedergewonnen wird. Dieses bekannte Bussystem enthält einen Sender, dessen in den Lichtwellenleiter eingekoppelte von dem Informationssignal abhängige Lichtleistung in digitalen Schritten änderbar ist, einen aus gleichstromgekoppelten Verstärkern ohne Verstärkungsregelung aufgebauten Empfänger, der eine Eingangsstufe zur Erzeugung des Nutzsignals, eine erste Komparatorstufe zur Erzeugung des Informationssignals aus dem Nutzsignal und eine zweite Komparatorstufe aufweist, der eine in digitalen Stufen änderbare Referenzspannung zugeführt wird, die den Pegel des Nutzsignals abtastet und ein Kollisionssignal abgibt, wenn das Nutzsignal die Referenzspannung übersteigt.

Aus der WO-A-8 404 638 ist ein Kommunikations-Netzwerk mit einem sternförmigen Lichtwellenleiter-Netzwerkaufbau bekannt, bei dem zur Zugriffssteuerung für Kommunikationsanforderungen ein zentraler Prozessor vorgesehen ist, der Betätigungssignale an die jeweils anfordernden Kommunikations-Teilnehmereinrichtungen (Rechner) nur bei Nichtvorliegen einer Anforderungskollision ausgibt, wobei das Vorliegen einer Anforderungskollision aufgrund einer Schwellwertüberschreitung durch einen Empfangspegel erfaßt wird.

Aus der GB-A-2 120 893 ist ein optischer Kollisionsdetektor bekannt, der das Vorliegen einer Kollision durch logische Bewertung von Eingangssignalen erfaßt.

Aus der BE-A-901 897 ist ein optisches Kommunikationsnetz bekannt, bei dem Kollisionen durch zumindest einen Kollisionsdetektor durch Vergleichsauswertung von Empfangspegeln erfaßt werden.

Aus der EP-A-0 313 231 ist ein Datenübertragungssystem bekannt, das mit einem gemeinsamen Übertragungsmittel verbundene Modems aufweist und bei dem eine Steuerung zur Vermeidung von Zugriffskollisionen vorgesehen ist, durch die ein Pilotsignal an alle Modems ausgesendet wird, woraufhin die Modems jeweils entsprechend dem Empfangspegel des Pilotsignals die Verstärkungswerte ihrer Sende- und Empfangsverstärker justieren, um eine in der Folge auftretende Kollision zuverlässig durch einen Kollisionsdetektor erfassen zu können.

Aus PATENT ABSTRACTS OF JAPAN, Bd. 8, Nr. 78 (E-237) (1515) v. 10. April 1984 und der JP-A-59 236 ist ein Signalkollisions-Erfassungssystem für ein Netzwerk mit optischem Sternkoppler bekannt, bei dem eine Signalkollision aufgrund einer Schwellwertüberschreitung des Empfangspegels einer an den Sternkoppler angeschlossenen Kollisionserfassungseinrichtung erfaßt wird.

Unter den bekannten lokalen Netzen gibt es Anordnungen, bei denen Rechnerknoten untereinander über ein Bussystem kommunizieren, z. B. ein optisches Bussystem mit Sternkoppler. Der Buszugriff wird durch verschiedene Verfahren geregelt, die sich in zwei Hauptgruppen aufteilen lassen: Deterministische Verfahren, die Kollisionen ausschließen, z. B. TDMA (Time Division Multiple Access) und stochastische Verfahren, die Kollisionen zulassen, z. B. CSMA/CD (Carrier Sense Multiple Access/Collision Detect). Bei den stochastischen Verfahren besteht das Problem, eine Kollision möglichst einfach, sicher und schnell zu erkennen. Es ist wesentlich, daß alle Knoten eine Kollision erkennen können, auch diejenigen, die an einer Kollision gar nicht beteiligt sind.

Eine Kollisionserkennung nach dem Stand der Technik kann durch Informations-, durch Phasen/Laufzeit- oder durch Pegelvergleich erfolgen.

Im "SIELOCnet" (Siemens Lokales Netzwerk) kommunizieren die Rechnerknoten beispielsweise untereinander über ein optisches Bussystem. Das optische Bussystem muß in seiner Struktur und Funktionalität den "SIELOCnet"-Anforderungen und Zielen angepaßt sein und sie unterstützen. Nur so erhält man ein logisch homogenes, geradliniges Gesamtsystem, das auch die konzipierte Leistungsfähigkeit voll entfalten kann.

Das optische Bussystem für dieses bekannte lokale Netzwerk besteht aus einem optischen Übertragungssystem und einem Netzwerk-Controller (NC). Der Netzwerk-Controller übernimmt u. a. die Steuerung des Datentransfers zwischen dem optischen Übertragungssystem und einem Host-Rechner sowie die Aufbereitung, Parallel/Serienwandlung, Codierung und Formatierung der Daten.

Das optische Übertragungssystem unterteilt sich in die Übertragungsstrecke, das optische Netz und den Sende-Empfängerbaustein (bei lokalen Netzen als "Transceiver" bekannt). Das optische Netz muß der Forderung nach dezentraler, also anforderungsgesteuerter Kommunikation Rechnung tragen. Außerdem muß es möglich sein, ohne Betriebsunterbrechung die Netzkonfiguration zu ändern, in dem die Anzahl der Rechnerknoten erhöht oder verringert wird. Es bietet sich an, das optische Netz als optischen Bus mit Sternkoppler (Durchgangsmischer) auszuführen. Die Transceiverfunktion wird in einer Busanschaltung realisiert, die u. a. auch die Modulation und die optoelektrische Wandlung der seriellen Datensignale des Netzwerk-Controllers übernimmt.

Das zur Verfügung stehende optische Übertragungssystem arbeitet mit einstellbaren elektro-optischen Sendern und gleichstromgekoppelten opto-elektrischen Empfänger. So werden im Hinblick auf Signalisierung, Überwachung, Codierung, Übertragungsgeschwindigkeit und Störsicherheit sowohl der Gleichstromcharakter des Übertragungssystems als auch die besonderen Vorteile der Lichtwellenleiter (LWL) nämlich die Unempfindlichkeit gegen elektromagnetische Störungen, Potentialtrennung zwischen Sender und Empfänger, keine Signalabstrahlung und dadurch kein Übersprechen, keine Funkenbildung an Faserkontaktstellen oder bei Faserbrüchen, keine Erdschleifen, große Bandbreite und geringes Gewicht, genutzt.

Der bei einem optischen Bus verwendete Sternkoppler kann ein Durchgangsmischer oder ein Reflexionsmischer sein. Beim Durchgangsmischer befinden sich alle Eingänge auf der einen Stirnseite und alle Ausgänge auf der anderen Stirnseite des Quarzplättchens, dem eigentlichen Mischer. Beim Reflexionsmischer ist eine Stirnseite des Mischerplättchens verspiegelt. Die Ein- und Ausgänge des Mischers sind alle auf der zweiten Stirnseite des Plättchens placiert. Deshalb muß in diesem Fall das Plättchen verbreitert und für den gleichguten Vermischungsgrad verlängert werden. Wegen des Spiegels und des größeren Plättchens sind die Verluste größer als beim Durchgangsmischer. Für "SIELOCnet" werden Durchgangsmischer verwendet.

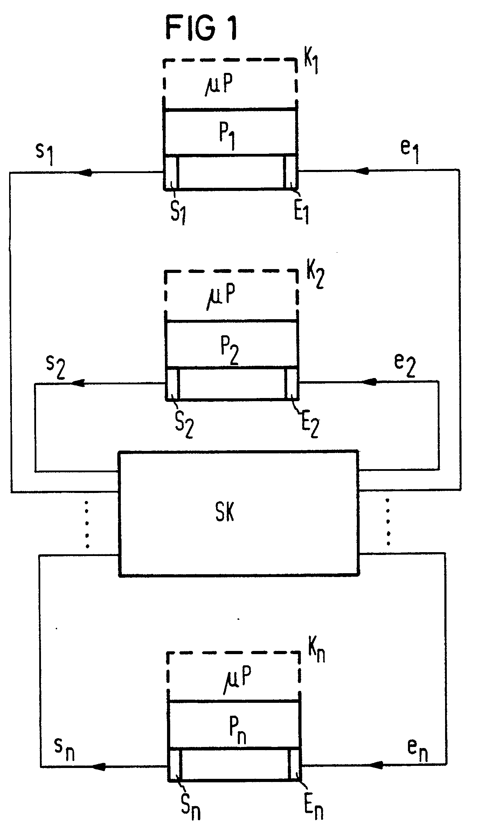

Im Mischerplättchen ist die logische Busfunktion realisiert. Das von einem Rechnerknoten an einen Eingang des Mischerplättchens gelangte Lichtsignal wird gleichmäßig an alle Ausgänge verteilt. Bei Verwendung eines Sternkopplers ist die Längenausdehnung des optischen Bus auf einen Punkt zusammengeschrumpft. Die Sendeleitungen $s_1...s_n$ und die Empfangsleitungen $e_1...e_n$ sind als Zuleitungen zum optischen Bus anzusehen. Daher erscheint ein optischer Bus mit Sternkopper topologisch als Stern, ist aber logisch ein echter Bus, verlg. Fig. 1.

Über den optischen Bus können gleichzeitig nur zwei Host-Rechner untereinander kommunizieren. Die Kommunikationswünsche der Host-Rechner müssen also synchronisiert werden. Bei einer im folgenden zugrunde gelegten paketorientierten Datenübertragung gelten für die Übertragung eines Paketes grundsätzlich die fünf bekannten Phasen: Verbindungsaufbau, Beginn der Datenübertragung, Datenübertragung, Ende der Datenübertragung und Verbindungsaufbau.

Bei einem Buszugriff entspricht dem Verbindungsaufbau die Busbelegung und dem Verbindungsabbau die Busfreigabe. Der Buszugriff wird durch die verschiedenen eingangs erläuterten Verfahren geregelt. Unabhängig vom Buszugriffsverfahren ist es wesentlich, dem jeweiligen Buszustand, belegt oder frei, ein eindeutiges physikalisches Kriterium anzuordnen. Im Falle der Übertragung mit Lichtwellenleitern bedeutet

Dauerlicht ≐ Bus belegt

kein Licht ≐ Bus frei

Durch den Gleichstromcharakter des optischen übertragungssystems können für die Datenübertragung die Codierung und das Zeichenformat freizügig gewählt werden. Für "SIELOCnet" ist beispielsweise ein asynchrones Zeichenformat festgelegt. Die Datenübertragung kann erst beginnen, wenn der Bus belegt ist. Deshalb muß der Zustand "Bus belegt" dem Ruhezustand für die Datenübertragung entsprechen. Auf das Zeichenformat bezogen heißt das: Dauerlicht entspricht "Stoppolarität".

Der Beginn der Datenübertragung ist durch das Startbit des ersten zu übertragenden Zeichens nach der Busbelegung gekennzeichnet. Die Zeitdauer von der Busbelegung bis zum ersten Startbit ist frei wählbar und wird in der Senderschaltung des Netzwerk-Controllers festgelegt. Diese einmal festgelegte Zeitdauer wird von der Empfängerschaltung überwacht und ausgewertet. Die Funktion der Serien/Parallelwandlung wird nur gestartet, wenn das erste Startbit innerhalb der Überwachungszeit eintrifft. Auf diese Weise können variable Lichtimpulse, die länger als die Überwachungszeit sind, zu Signalisierungszwecken übertragen werden, ohne die eigentliche Empfängerfunktion zu starten.

Das Ende der Datenübertragung ist durch das Ausbleiben weiterer Startbits gekennzeichnet. Vorausgesetzt wird, daß die Senderschaltung alle Zeichen eines Pakets in lückenloser Reihenfolge sendet. Das ist auch für eine gute Nutzung des Datenkanals unerläßlich. Nach dem letzten Zeichen eines Pakets muß noch ausreichend lang "Stoppolarität" als Paketendekennung herrschen. Erst dann wird der Bus freigegeben. Für die Auswertung kann dieselbe Zeitstufe verwendet werden, die auch für die Auswertung des Beginns der Datenübertragung benutzt wird.

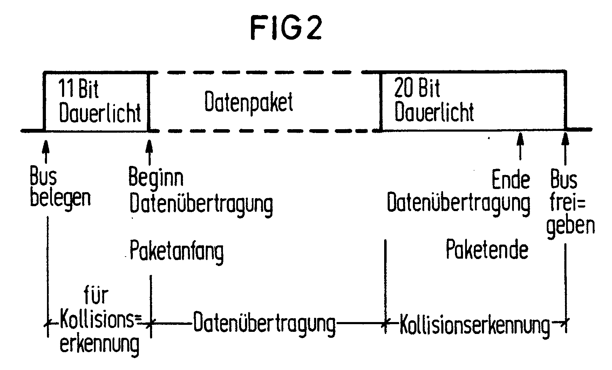

In Fig. 2 ist der Blockrahmen eines Datenpakets dargestellt, der sowohl die Anforderungen einer asynchronen Übertragungsprozedur als auch die Anforderungen eines Übertragungsprotokolls für ein optisches Bussystem gleichermaßen erfüllt. Diese Festlegung überspannt das ganze optische Übertragungssystgem. Die Funktionen "Blockerkennung", "Datenübertragung", "Kollisionserkennung" und "Sondersignalisierung" können als gemeinsames Konzept realisiert werden.

Kollisionen treten bei stochastischen Buszugriffsverfahren dann auf, wenn zwei oder mehr Rechnerknoten annähernd gleichzeitig (abhängig von der Systemlaufzeit) ein Datenpaket senden. Bei einem optischen Bus mit Sternkopplern kann eine Kollision von Datenpaketen nur punktuell im Sternkoppler auftreten, da jedem Rechnerknoten je ein eigener Lichtwellenleiter zum Senden und zum Empfangen zugeordnet sind, vergl. Fig. 1.

Eine Kollisionserkennung kann durch Pegelvergleich, Phasen- und Laufzeitvergleich oder Informationsvergleich erfolgen. Ein Verfahren zur Kollisionserkennung soll möglichst unabhängig von der Codierung und auf der physikalischen Ebene des "ISO-Schichtenmodells" der ISO (International Standards Organisation) realisierbar sein, um komplexe Algorithmen in höheren Ebenen zu vermeiden. Für "SIELOCnet" wurde als einfachste und geradlinige Möglichkeit die Kollisionserkennung durch Pegelvergleich gewählt. Dieses Verfahren ist für einen optischen Bus mit Sternkoppler prädestiniert, weil Kollisionen nur punktuell auftreten können und die Lichtpegel weder durch Einstreuungen noch durch Erdschleifen verfälscht werden.

Tritt eine Kollision auf, addieren sich die entsprechenden Lichtpegel im Sternkoppler. Dieses Signalgemisch erreicht jeden Rechnerknoten, auch jene Rechnerknoten, die nicht an der Kollision beteiligt sind. Durch die Bewertung dieses Mischpegels erkennt jeder Rechnerknoten eine Kollision direkt, ohne daß erst ein Sondersignal ("Jam Signal") zusätzlich an alle auch an der Kollision nicht beteiligte Rechnerknoten, gesendet werden muß. Es wird zwischen einfachem und zwei-bis n-fachem Pegel unterschieden. Für eine eindeutige und sichere Auswertung eines doppelten Pegels gegenüber einem einfachen Pegel müssen die von beliebigen Sendern stammenden Lichtpegel für einen bestimmten Empfänger gleich groß erscheinen. Aus diesem Grund muß das optische Übertragungssystem abgeglichen werden. Durch den Gleichstromcharakter des optischen Übertragungssystems können dadurch die Summenpegel unverfälscht übertragen werden. Linearität ist mindestens bis zum doppelten Wert des max. einfachen Pegels nötig.

Das Konzept der Kollisionserkennung über Pegelbewertung verlangt bei einer Kollision zweier Datenpakete mindestens für die Dauer eines Datenbit eine Pegeladdition, unabhängig vom zeitlichen Bezug der Pakete zueinander und des Dateninhaltes der Pakete. Bei der seriellen Datenübertragung müssen neben der eigentlichen Information auch Kriterien übertragen werden, die es dem Empfänger ermöglichen bei der Auswertung des Bitstromes einen Phasenbezug herzustellen. Dies kann durch Zusatzinformation (z. B. Start-Stopbit, SYN-Zeichen) oder Codemanipulation (z. B. Scrambler, Manchester Code) erreicht werden. Allen Maßnahmen ist gemeinsam, daß sie zyklisch wiederholt werden müssen. Nur so kann der Phasenbezug während der gesamten Dauer der Datenübertragung aufrechterhalten werden. Der Wiederholzyklus ist bei den einzelnen Maßnahmen unterschiedlich lang und beträgt z. B. beim Manchester Code 1 Bit, beim Start/Stopverfahren ein Zeichen, beim Einsatz eines Scramblers ist er abhängig vom gewählten Polynom, bei der Verwendung von SYN-Zeichen ist die Stabilität der Taktgenerator ausschlaggebend. Betrachtet man für eine Pegeladdition nur die zyklisch wiederkehrenden Synchronisationsmaßnahmen, dann ist man unabhängig vom Dateninhalt der Pakete. Eine Pegeladdition tritt immer auf, wenn sich ein Dauerlichtimpuls mit der Länge des Wiederholzyklus der betreffenden Synchronisationsmaßnahme mit einem Datenpaket überlagert. Dieses Prinzip gewährleistet eine Kollisionserkennung mit 100 % Wahrscheinlichkeit.

Am zweckmäßigsten wird jedem Datenpaket ein Dauerlichtimpuls entsprechender Länge vorangestellt. Eine Pegeladdition tritt dann gleich zu Beginn einer Kollision auf und wird so frühzeitig wie möglich erkannt. Das paßt mit der bisherigen Festlegung zusammen: Busbelegung = Dauerlicht. Auf Grund des gewählten asynchronen Zeichenformats wird der Dauerlichtimpuls am Anfang eines Datenpaketes mit 11 Bit (ca. 1 Zeichen) Länge festgelegt. Bei einer Kollision ergibt sich eine Pegeladdition von mindestens 1 Bit Länge, für den Fall, daß der Bitstrom nur aus Stopbits besteht, d. h. die Daten sind "OOH". Das Ende des Datenpakets wird mit 20 Bits (2 Zeichen) Dauerlicht markiert. Erfolgt von einem Rechnerknoten nur bei freiem Bus ein Buszugriff ("carrier sense"-Funktion) und sind die Datenpakete länger als die Laufzeit auf dem optischen Bus, kann eine Kollision von Datenpaketen nur zu Beginn oder während eines Datenpakets beginnen. Sind die Datenpakete kürzer als die Laufzeit auf dem optischen Bus, oder ist der Buszugriff willkürlich, kann eine Kollision auch am Ende eines Datenpaketes beginnen. Weil die Datenpakete mit Dauerlichtimpulsen eingerahmt sind, ist für die Kollisionserkennung der allgemeinste Fall abzudecken.

Der vorliegenden Erfindung liegt die Aufgabe zugrunde, ein Verfahren der eingangs genannten Art zu schaffen, das die erläuterten Nachteile des Standes der Technik durch einen automatischen Pegelabgleich vermeidet. Insbesondere soll aufgabengemäß ein Verfahren der genannten Art geschaffen werden, mit dessen Hilfe ohne individuelle Abgleichmaßnahmen Systemänderungen und/oder Systemerweiterungen beherrschbar sind und bei dem alterungsbedingte oder anderweitig bedingte Änderungen von Bauteileigenschaften betreffend deren elektrische und/oder optische Werte die Betriebssicherheit nicht beeinflussen können.

Die der Erfindung zugrundeliegende Aufgabe wird durch ein Verfahren der eingangs genannten Art und gemäß dem Oberbegriff des Patentanspruchs 1 gelöst, das erfindungsgemäß durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Im folgenden wird die Erfindung anhand mehrerer, Ausführungsbeispiele betreffender und erläuternder Figuren im einzelnen beschrieben.

Fig. 1    zeigt eine schematische Darstellung in Form eines Blockschaltbildes für ein optisches Bussystem mit n Knoten und einem gemeinsamen Sternkoppler.

Fig. 2    zeigt eine schematische Darstellung eines Blockrahmens für ein über den optischen Bus zu übertragendes Datenpaket.

Fig. 3    zeigt eine erläuternde Darstellung der sog. Kollisionserkennung mittels Pegelbewertung.

Fig. 4    zeigt ein Blockschaltbild für eine in den Knoten zu verwendende Busanschaltung.

Fig. 5    zeigt ein Signaldiagramm für während eines Abgleichvorgangs auftretende Signale.

Fig. 6    zeigt verschiedene Diagramme betreffend das Erkennen eines Sondersignals "ABGLEICH" auf dem optischen Bus.

Fig. 7    zeigt ein Prinzipschaltbild für ein bevorzugtes Ausführungsbeispiel der Busanschaltung gemäß Fig. 4.

Fig. 8    zeigt zwei Flußdiagramme oder Funktionsablaufpläne für den Abgleich eines optischen Pegels gemäß dem Verfahren nach der vorliegenden Erfindung.

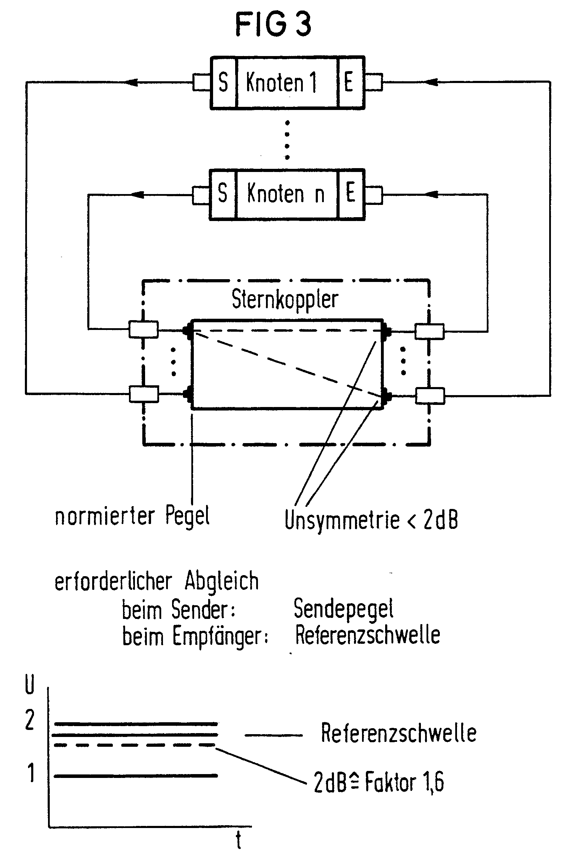

Damit für jeden Empfänger E jeder beliebige Sender S von Knoten in dem System mit gleich großem Pegel erscheint, wird das optische Übertragungssystem abgeglichen. Die unterschiedliche Dämpfung der Sendeleitungen einschließlich der Steckerübergänge und der Klebestellen am Mischerplättchen eines Sternkopplers wird durch Einstellen der Sendepegel berücksichtigt. Am Eingang des Mischerplättchens herrscht dann ein normierter Pegel, und der Pegel jedes beliebigen Senders S ist an dieser Stelle gleich groß. Die unterschiedliche Dämpfung der Empfangsleitungen erfordert bei den Empfängern E eine individuelle Einstellung einer Referenzschwelle für die Erkennung des zwei-bis n-fachen Pegels (vergl. Fig. 3).

Dazu sieht das erfindungsgemäße Verfahren vor, daß bei einem erforderlichen Pegelabgleich für das lokale Netz ein Prozeß derart abgewickelt wird, daß eine Grundphase vorgesehen ist, in der in allen Knoten $K_1 ... K_n$(vergl. Fig. 1) jeweils diesen Knoten individuell zugeordnete Pegelabgleicheinrichtungen $P_1 ... P_n$ miteinander synchronisiert werden, daß eine erste Abgleichphase vorgesehen ist, in der alle Pegelabgleicheinrichtungen $P_1 ... P_n$ gleichzeitig einen Prozeß zum Einstellen der Referenzspannung auf den niedrigsten empfangenen Pegel durchführen, wodurch die Summe aler Dämpfungsanteile des Signalpfades auf der Empfangsseite des betreffenden Knotens vom Ausgang des Sternkopplers bis zu den Eingangsklemmen der Komparatorstufe berücksichtigt ist, und daß eine zweite Abgleichphase vorgesehen ist, in der alle Pegelabgleicheinrichtungen $P_1 ... P_n$ nacheinander einen Prozeß zum Einstellen des Sendepegels des eigenen Senders so durchführen, daß die ausgesendete Lichtleistung an dem eigenen Empfänger zu der als niedrigste registrierten Empfangsleistung rührt. Dadurch ist die Summe aller Dämpfungsanteile des Signalpfades auf der Sendeseite des betreffenden Knotens von den Ausgangsklemmen der Sendestromquelle bis zu dem Eingang des Sternkopplers berücksichtigt. Der Sendepegel jedes der n Knoten $K_1 ... K_n$ in dem lokalen Netz weist dadurch an dem ihm zugeordneten Eingang des Sternkopplers den gleichen Wert wie alle anderen Sendepegel an den betreffenden anderen Eingängen auf, so daß für den Fall, daß im Normalbetrieb des lokalen Netzes zwei oder mehr Knoten gleichzeitig ein Informationssignal in den optischen Bus einspeisen, der zumindest zweifache Wert des normierten Sendepegels auftritt, der durch den Knoten jeweils individuell zugeornete Kollisionskomparatoren erfaßt wird, wodurch der Zustand einer Kollision bei allen Knoten $K_1 ... K_n$ erkannt wird und ein an sich bekannter Kollisionsentflechtungs-Algorithmus initiiert wird.

Der Abgleichvorgang läuft demnach erfindungsgemäß in zwei Phasen ab. In der ersten Phase stellt sich nacheinander jeder Sender S eines Rechnerknoten K mit seinem maximalen Sendepegel vor. Die Referenzschwellen aller Empfänger E werden auf den jeweils niedrigsten Pegelwert nachgeführt. Der für jeden Empfänger E individuelle Wert wird gespeichert. Dieser Wert stellt für eine bestimmte Systemkonfiguration den größtmöglichen Arbeitspegel dar. In der zweiten Phase wird nacheinander jeder Sender S eingeschaltet und der Sendepegel erniedrigt, bis sich am zugehörigen Empfänger E desselben Rechnerknotens K der in der ersten Phase gespeicherte Pegelwert einstellt. Am Ende der zweiten Phase sind alle Sender S so eingestellt, daß am Eingang des Sternkopplers Sk ein normierter Pegel herrscht. Mit diesem Verfahren können alle individuellen Dämpfungsanteile außer der Unsymmetrie des Mischerplättchens ausgeglichen werden. Unsymmetrie entsteht, wenn sich das Licht, von unterschielichen Eingängen kommend, nicht absolut gleichmäßig auf alle Ausgänge verteilt. Damit für die Einstelltoleranzen des Senders und der Referenz genügend Spielraum bleibt, soll die Unsymmetrie nicht größer als 2dB (= Faktor 1,6) sein.

Durch den Abgleich des Systems reduziert sich der erforderliche Dynamikbereich der Empfänger E. Wegen des normierten Pegels muß die Empfängerdynamik nur die max. Dämpfung der Empfansleitungen abdecken, wenn ein Rechnerknoten K mit einer Leitungslänge ca. 0 km und ein anderer Rechnerknoten mit einer max. Leitungslänge von 1,5 km gleichzeitig angeschlossen sind. Der normierte Pegel bietet weiter den Vorteil, daß der Störabstand gegenüber Reflexionen für alle Empfänger E unabhängig von der Leitungslänge gleich ist.

Das optische Übertrangungssystem manuellnach dem beschriebenen Verfahren abzugleichen, wäre bei einer realistisch angenommenden Anzahl der Rechnerknoten K und der Ausdehnung des Ntzes viel zu aufwendig. Deshalb ist der automatisierte Abgleichvorgang gemäß der vorliegenden Erfindung vorteilhaft. Der automatische Abgleich kann durch verschiedene Kriterien initiiert werden. Beispielsweise wird ein weiterer Rechnerknoten K während des Betriebs an das Netzwerk angeschlossen und aktiviert, oder es hat sich die Betirebstemperatur eines Rechners um mehr als $10°$ C verändert einer Einsparung von Kompensationsmitteln wird dadurch ermöglicht. Die Initiierung kann vorteilhafterweise auch zyklisch nach beispielsweise jewils 15 Minuten erfolgen.

Für die Dauer des Abgleichvorgangs muß der Normalbetrieb auf dem optischen Bus unterbrochen werden. Durch eine Abgleichanforderung, die jeden Knoten K erreicht, wird der automatische Abgleich gestartet. Die Abgleichanforderung kann ein normales Datenpaket mit entsprechendem Inhalt oder ein Sondersignal sein. Ein neu hinzukommender Knoten K ist noch nicht eingepegelt und darf noch kein Datenpaket senden, da eine mögliche Kollision nicht sicher erkannt würde. Vorzugsweise wird in dem Netzwerk der Abgleichwunsch eines Knotens K immer durch ein Sondersignal auf dem optischen Bus signalisiert.

Vorteilhafterweise ist erfindungsgemäß vorgesehen, daß für den Fall, daß zumindest in einem Knoten, z.B. $K_1$ ein Kriterium für einen Pegelabgleich entsteht, dieser Knoten $K_1$ mittels seines elektrooptischen Senders $S_1$ einen von den Impulsen des Nutzdatenflusses unterscheidbar längeren Lichtimpuls als Abgleichanforderungssignal in das Bussystem einspeist, das jeden anderen Knoten $K_2...K_n$ auffordert, den Normalbetriebszustand zu unterbrechen und in einen Abgleichzustand zu treten und damit bei diesen Knoten $K_2...K_n$ und bei sich selbst die Grundphase einzuleiten. In der Grundphase werden in allen Knoten $K_1...K_n$ der digital einstellbare Sendepegel und die digital einstellbare Referenzespannung auf ihren jeweiligen Maximalwert eingestellt. In allen Knoten $K_1...K_n$ werden ein für einen Zähl-Algorithmus vorgesehener, durch ein Zeitglied gesteuerter, freilaufender Zähler und dieses Zeitglied auf Null gesetzt. Mit Beendigung des Abgleichanforderungssignals wird die Grundphase beendet und es beginnt synchron bei allen Knoten $K_1...K_n$ die erste Abgleichphase, in der das freilaufende Zählen des Zählers gestartet wird, in der jeder vorhandene Knoten $K_1...K_n$ abhängig von einer ihm individuell zugeteilten Knotennummer und bei dieser Knotennummer entsprechendem Zählstand des Zählers, nämlich bei Koinzidenz von Zählstand und Knotennummer, seinen maximalen Sendepegel zeitlich getrennt von den Lichtimpulsen aller anderen Knoten über das optische Bussystem allen anderen Knoten als Abgleichimpuls anbietet. Mit Eintreffen des Abgleichimpulses wird das freilaufende Zählen unterbrochen und das Zeitglied rückgesetzt. Während der Impulsdauer wird bei allen Knoten einschließlich des Knotens, der den Abgleichimpuls sendet, gleichzeitig die Referenzspannung auf den jeweils niedrigsten, individuell unterschiedlichen Empfangspegel eingestellt. Mit Ende des Abgleichimpulses wird das freilaufende Zählen wiedergestartet. In jedem der Knoten $K_1...K_n$ ist eine feste Information über die maximal mögliche Knotenanzahl, vorzugsweise gleich der Anzahl der Ein-/Ausgänge des Sternkopplers SK gespeichert. Bei Koinzidenz des Zählstandes mit dieser Information entsteht in jedem Knoten $K_1...K_n$ ein Kriterium, mittels dessen die erste Abgleichphase beendet und die zweite Abgleichphase eingeleitet wird, in der die Steuervorgänge für den Zähler und das Zeitglied wie in der ersten Abgleichphase ablaufen. Während des Abgleichimpulses wird der eigene Sendepegel derart an den Wert der in der ersten Abgleichphase individuell abgespeicherten Referenzspannung angepaßt, daß der Empfangspegel des den Abgleichimpuls sendenden Knotens, z.B. $K_2$, gleich dessen individuell abgespeicherter Referenzspannung wird. Die zweite Abgleichphase wird in derselben Weise wie die erste Abgleichphase beendet. Anschließend schalten alle Knoten $K_1...K_n$ von dem Abgleichzustand in den Normalbetriebszustand zurück.

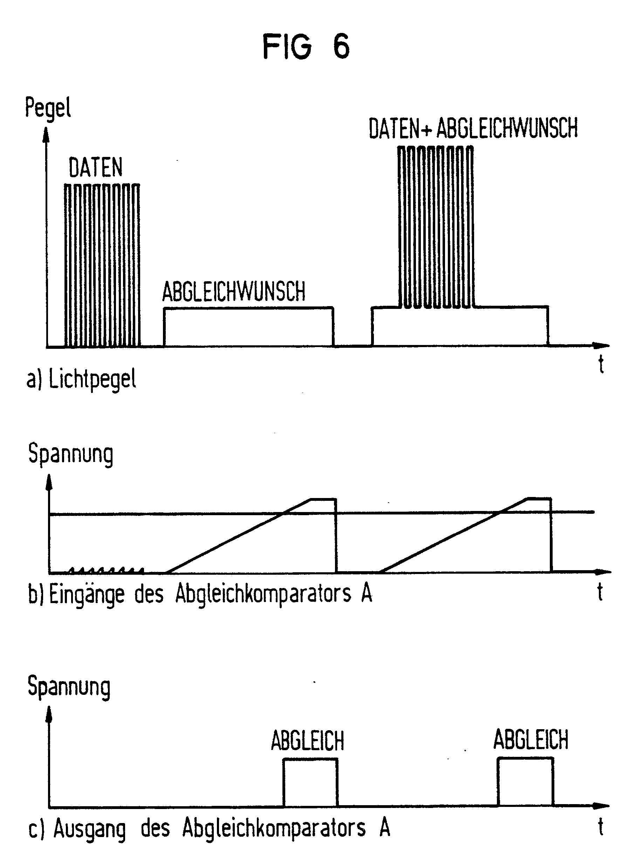

Das Sondersignal wird vorzugsweise als Dauerlichtimpuls mit einer Mindestlänge von 20 Bit festgelegt und wird dadurch bei jedem Rechnerknoten K sicher erkannt, und zwar unabhängig davon, ob es sich mit einem Datensignal beliebigen Pegels überlagert oder nicht. Der Pegel des Sondersignals kann durch ein Datensignal nur stellenweise erhöht, aber nicht reduziert werden vergl. Fig. 6.

Der Abgleichwunsch eines Rechnerknotens K wird nach den Regeln des Buszugriffsprotokolls gesendet. Wenn ein in Betrieb befindliches System mit hohem normierten Pegel um einen weit entfernten Knoten erweitert wird, ist beim Senden des Abgleichwunsches eine Kollision möglich, die aber wegen des niedrigen Pegels des Sondersignals nicht sicher erkannt wird. Der Rechnerknoten, der als letzter vor dem Erkennen des Abgleichwunsches ein Datenpaket sendete, wiederholt vorteilhafterweise dieses sicherheitshalber nach dem Abgleichvorgang. Alle Rechnerknoten verwerfen das letzte, vor dem erkannten Abgleichwunsch empfanagene Datenpaket. Dem Kriterium "Abgleichwunsch" wird zusätzlich die Bedeutung "Kollision" zugeordnet.

Der Abgleichvorgang wird erst mit dem Ende des Sondersignals gestartet. Die Sondersignale dürfen sich zeitlich beliebig überlappen und im Pegel beliebig überlagern, ohne daß sich die Startbedingung für den Abgleichvorgang ändert. In der Praxis wird aber kein Rechnerknoten einen Abgleichwunsch generieren, wenn er gerade den Abgleichwunsch eines anderen Knoten erkannt hat. Die Sondersignale überlagern sich dann max. um die Systemlaufzeit des opt. Bus und die Erkennungs- und Reaktionszeit im Rechnerknoten. Die zulässige Überlagerung der Sondersignale kann vorteilhafterweise gezielt für den Fall genutzt werden, wenn die normale Länge des Sondersignals für die Firmware nicht ausreicht, vom Normalbetrieb auf Abgleich umzuschalten. In einem solchen Fall kann der betreffende Knoten nach Erkennen des Abgleichwunsches so lange selbst Dauerlicht senden, bis er die Umschaltung auf Abgleich vollzogen hat.

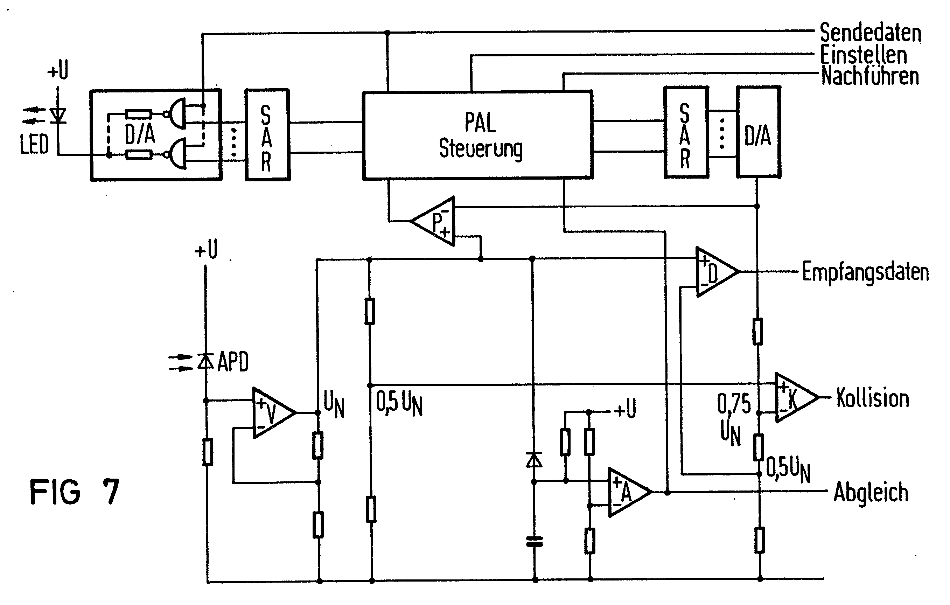

Der beschriebene Abgleichalgorithmus ist vorzugsweise in jedem Knoten $K_1...K_n$ individuell in Form von Firmenware realisiert. Erforderliche Stellglieder, Digital/Analog-Wandler D/A Speicher, sowie Successive Approximation Register SAR sind Teil der bereits genannten Busanschaltung, vergl. Fig. 7.

Diese Einheiten werden von Software-Routinen gesteuert, die im Netzwerk-Controller implementiert sind. Neben dem Abgleichwunsch müssen noch weitere Dauerlichtimpulse zum Nachführen der Referenzschwelle für die Kollisionserkennung und zum Einstellen der Sendepegel für den normierten Pegel gesendet werden. Alle Dauerlichtimpulse werden vorzugsweise mit gleicher Länge gesendet. Bei einem Rechnerknoten trifft für einen Abgleichvorgang eine Serie von Dauerlichtimpulsen ein, von denen der erste als Abgleichwunsch und alle anderen als Meßimpulse interpretiert werden. Die Steuerung des automatischen Abgleichs geschieht über die drei Routinen "Initialisierung", "Abgleichwunsch" und "Ableich".

Die Routine "Initalisierung" wird bei dem Rechnerknoten aufgerufen, um den das Netzwerk erweitert wird, oder bei allen Knoten, wenn bei einer Neukonfiguration des Netzwerks die Knotennummern neu vergeben und/oder die Gesamtzahl der Rechnerknoten geändert wird. Zunächst werden dazu ein Knotennummernzähler auf 0 und die Register SAR auf den höchsten Wert gesetzt, damit einerseits nach dem niedrigsten, empfangenen Pegel gesucht und andererseits mit vollem Pegel gesendet werden kann. Dann werden die aktuellen Werte für die jeweilige physikalische Knotennummer und die Gesamtzahl der Knoten von Schaltern, PROM's oder vom Host-Rechner übernommen.

Die Routine "Abgleichwunsch" startet z. B. einen Zeitgeber-Baustein, der den ersten Dauerlichtimpuls generiert. Dieser Impuls muß durch Hardware erzeugt werden, da derselbe Knoten diesen Impuls auch bei sich selbst softwaregesteuert empfangen und als Abgleichwunsch interpretieren muß. Dadurch können jeder beliebige Knoten oder mehrere Knoten gleichzeitig einen Abgleichwunsch äußern.

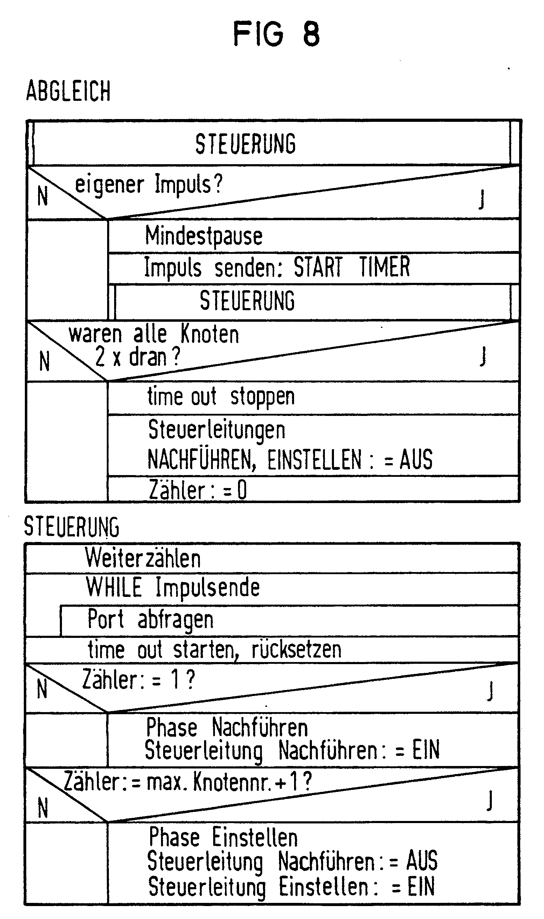

Die Routine "Abgleich" ermittelt durch einen Zähleralgorithmus die Kriterien für die Steuersignale "Nachführen" (erste Phase), "Sender einstellen" (zweite Phase) und "Impuls senden". Alle Knoten zählen die Lichtimpulse mit. Sobald der Zählerstand den Wert der physikalischen Adresse eines Knoten erreicht hat, sendet dieser Knoten seinen Lichtimpuls. Mit dem Ende eines jeden Lichtimpulses wird in allen Knoten eine Überwachungszeit neu gestartet, die in allen Knoten abläuft, wenn der Knoten mit der nächst höheren Knotennummer ausgefallen oder nicht vorhanden ist. Fehlen mehrere Knoten nacheinander, so wird durch Kettung der Überwachungszeit weitergezählt, vergl. Fig. 8. Die Routine "Abgleich" wird sowohl mit Beginn eines empfangenen Lichtimpulses als auch von der abgelaufenen Überwachungszeit ab angestoßen. Fig. 5 zeigt einen vollständigen Abgleichvorgang. In einem Netzwerk mit fünf möglichen Knoten sind die Knoten Nr. 3 und Nr. 4 vorhanden (aktiviert).

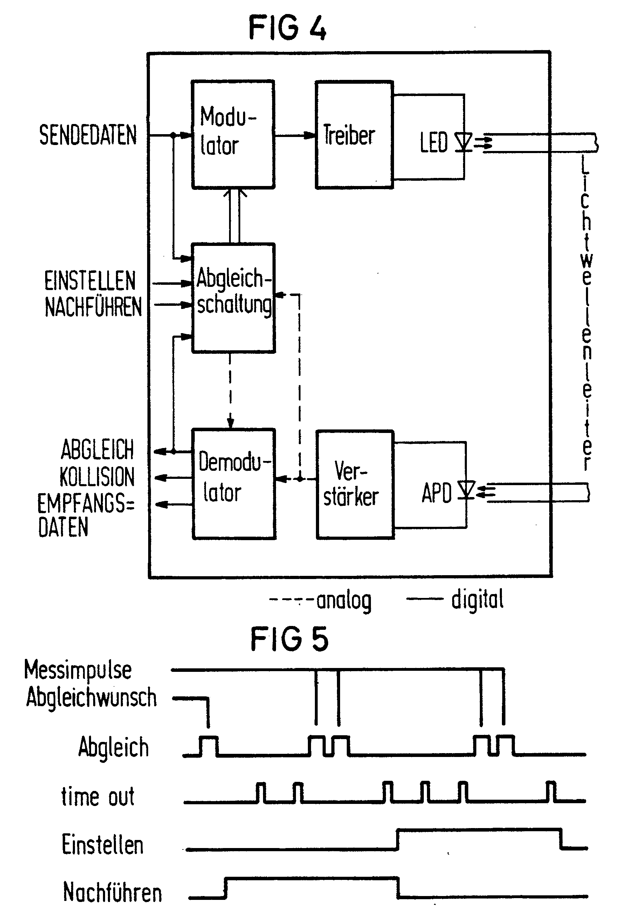

Fig. 4 zeigt, wie bereits erwähnt, das Blockschaltbild einer Busanschaltung. Die vom Netzwerk-Controller kommenden seriellen Sendedaten gelangen über einen Modulator und durch einen Treiber verstärkt an eine lichtemittierende Diode LED. Die LED wandelt die elektrischen Impulse in Lichtimpulse um und führt sie einem Lichtwellenleiter des optischen Bus zu. Vom optischen Bus eintreffende Lichtimpulse werden mit einer APD (Avalanche-Photodiode) wieder in elektrische Impulse zurückgewandelt, verstärkt und mittels eines Demodulator demoduliert.

Die zurückgewonnenen Empfangsdaten stehen dann dem Netzwerk-Controller für die weitere Bearbeitung zur Verfügung. Der Demodulator liefert auch das Kollisionssignal, sobald die nach dem Abgleichvorgang eingestellte, individuelle Referenzschwelle überschritten wird. Die ausgewerteten Dauerlichtimpulse beim automatischen Abgleich treten an einer Signalleitung "Abgleich" nämlich dem dritten Ausgang des Demodulators auf. Über Leitungen "Einstellen" und "Nachführen" steuert der Netzwerk-Controller den automatischem Abgleich.

Im Normalbetrieb sind beide dieser Leitungen inaktiv. Sendet in diesem Zustand irgend ein Rechnerknoten einen Abgleichwunsch (1. Dauerlichtimpuls), so werden durch die Verbindung der Leitung "Abgleich" mit einer Abgleichschaltung die Register SAR auf den höchsten Wert gesetzt. Der Netzwerk-Controller muß dann nur noch die Phasen "Nachführen" und "Einstellen" steuern, in dem er alternativ die betreffende Steuerleitung aktiviert. Für den Anstoß des ersten Abgleichvorgangs bei der Inbetriebnahme des Netzwerks muß der Netzwerk-Controller die Möglichkeit haben, die Abgleichschaltung zu initialisieren die Register SAR auf höchsten Wert stellen. In diesem Fall werden beide Steuerleitungen gleichzeitig aktiviert. Durch eine Verbindung der Leitung "Sendedaten" mit der Abgleichschaltung kann die Abgleichschaltung erkennen, wann der eigene Dauerlichtimpuls gesendet wird. Nur in diesem Fall darf der betreffende Sender eingestellt werden. Der Abgleichschaltung wird auch das verstärkte, analoge Empfangssignal angeboten. Sie liefert den Analogwert für die Referenzschwelle der Kollisionserkennung an den Demodulator und den Digitalwert des Sendepegels an den Modulator.

Die Abgleichschaltung für den automatischen Abgleich innerhalb der Busanschaltung besteht entsprechend den beiden Phasen des Abgleichalgorithmus aus einem D/A-Wandler zum Einstellen des Sendepegel und einem D/A-Wandler zum Nachführen der Referenz für einen Kollisionskomparator K. Beide D/A-Wandler werden durch Register SAR eingestellt. Die notwendige Steuerungs-Software ist in einem PLA-Baustein (Programmable Logic Array) enthalten. Entsprechend den Eingangsgrößen "Einstellen", "Nachführen", "Sendedaten" und "Abgleich" startet die Steuerung das betreffende Register SAR und versorgt es mit dem aktuellen Wert eines Pegelvergleichers P.

Der D/A-Wandler zum Einstellen des Sendepegels ist vorzugsweise diskret aus einem R/2R-Netzwerk und Open-Collector-Gattern aufgebaut. Der zugehörige SAR-Baustein bestimmt die Zweige des R/2R-Netzwerkes, die abhängig von den Sendedaten die LED in der gewünschten Intensität erregen. Die Gatter übernehmen dabei gleichzeitig die Funktion eines schnellen Leistungstreibers.

Der Dynamikbereich des Empfängers ist durch die Betriebsspannung und den Gleichtaktbereich der Komparatoren begrenzt, weil ohne Verstärkungsregelung gearbeitet wird. Diese Begrenzung wirkt sich nur bei der Phase "Nachführen" aus. Der schwächste Sendepegel am Eingang des Sternkopplers SK darf am Empfänger E mit der niedrigsten Dämpfung der Empfangsleitung maximal den Signalpegel erreichen, der als Höchstwert von dem betreffenden D/A-Wandler erzeugt werden kann. Nur wenn diese Bedingung erfüllt ist, verläuft der Abgleichvorgang exakt.

Eine vorteilhafte Weiterbildung der Erfindung sieht vor, daß jeweils ein Nutzdatenpaket von zwei langen Lichtimpulsen eingerahmt ist, wobei diese Lichtimpulse länger als die Periodendauer der für die verwendete Codierungsart notwendigen Synchronisationsvorgängen für die Nutzinformation sind, so daß eine auftretende Kollision sicher erkannt wird.

Eine andere vorteilhafte Weiterbildung sieht vor, daß die Impulslänge des Abgleichanforderungssignals variiet wird, um unterschiedliche Sondersignale zusätzlich zu dem Abgleichanforderungssignal zu übertragen.

Vorteilhafterweise ist die Impulslänge des Abgleichanforderungssignals gleich der des Abgleichimpulses.

In Weiterbildung der Erfindung ist desweitern vorgesehen, daß die Knotennummer und die Information über die maximale Knotenanzahl in der Inbetriebnahmephase des Netzwerks oder bei Änderungsmaßnahmen für neu hinzukommende Knoten jedem der Knoten individuell, z. B. über einen Wartungskanal, eingegeben werden. Eine alternative Lösung dazu sieht in Weiterbildung der Erfindung vor, daß die Knotennummer und/oder die Information über die maximale Knotenzahl bei dem sich in Betrieb befindlichen Netzwerk durch Nutzdatenpakete von jedem beliebigen Knoten aus in jedem der Knoten geändert werden können.

Schließlich ist in Weiterbildung der Erfindung vorgesehen, daß in jedem Knoten des Netzwerks Information über die aktuelle Netzkonfiguration, nämlich die maximale Knotenanzahl und die in diesem Bereich an Knoten vergebene Knotennummern, für jeden Knoten abrufbar gespeichert ist.

## Bezugszeichenliste

| | |
|---|---|
| $K_1 \ldots K_n$ | Knoten |
| $P_1 \ldots P_n$ | Pegelabgleicheinrichtung |
| $S_1 \ldots S_n$ | Sender |
| $E_1 \ldots E_n$ | Empfänger |
| $s_1 \ldots s_n$ | Sendeleitung |
| $e_1 \ldots E_n$ | Empfangsleitung |
| SK | Sternkoppler |
| LED | lichtemittierende Diode |
| D/A | Digital / Analog-Wandler |
| SAR | Successive Appoximations-Register |
| PLA | PLA-Baustein |
| P | Pegelvergleicher |
| K | Kollisionskomparator |
| APD | Avalanche-Photodiode |

## Ansprüche

**1.** Verfahren zum automatischen Pegelabgleich in einem lokalen Netz, insbesondere für eine Mehrrechneranordnung, mit einem Bussystem mit Lichtwellenleitern und einem optischen Sternkoppler (SK), zum Einstellen eines normierten Pegels an allen Eingängen dieses Sternkopplers zum Zwecke einer Kollisionserkennung, wobei das zu übertragende Informationssignal durch einen elektrooptischen Sender in ein Lichtsignal umgewandelt und dieses in einen Lichtwellenleiter eingekoppelt wird, wobei das über Lichtwellenleiter übertragene Lichtsignal durch einen optoelektrischen Empfänger in ein elektrisches Nutzsignal umgewandelt und aus diesem das Informationssignal wiedergewonnen wird, wobei für jeden Knoten ($K_1 \ldots K_n$), beispielsweise ein Rechner, jeweils ein Sender (S) vorgesehen ist, dessen in den Lichtwellenleiter eingekoppelte von dem Informationssignal abhängige Lichtleistung in digitalen Schritten änderbar ist, und wobei für jeden Knoten ($K_1 \ldots K_n$) jeweils ein aus gleichstromgekoppelten Verstärkern ohne Verstärkungsregelung aufgebauter Empfänger (E) vorgesehen ist, der eine Eingangsstufe zur Erzeugung des Nutzsignals, eine erste Komparatorstufe zur Erzeugung des Informationssignals aus dem Nutzsignal und eine zweite Komparatorstufe aufweist, der eine in digitalen Stufen änderbare Referenzspannung zugeführt wird, die den Pegel des Nutzsignals abtastet und ein Kollisionssignal abgibt, wenn das Nutzsignal die Referenzspannung übersteigt,
**dadurch gekennzeichnet,**
daß bei einem erforderlichen Pegelabgleich für das lokale Netz ein Prozeß derart abgewickelt wird, daß eine Grundphase vorgesehen ist, in der in allen Knoten ($K_1 \ldots K_n$) jeweils diesen Knoten individuell zugeordnete Pegelabgleicheinrichtungen ($P_1 \ldots P_n$) miteinander synchronisiert werden, daß eine erste, auf die Grundphase folgende Abgleichphase vorgesehen ist, in der jeweils von jedem Knoten mit dem in der Grundphase eingestellten maximalen Pegel gesendet wird und in der alle Pegelabgleicheinrichtungen ($P_1 \ldots P_n$) gleichzeitig einen Prozeß zum Einstellen der Referenzspannung auf den niedrigsten empfangenen Pegel durchführen, wodurch die Summe aller Dämpfungsanteile des Signalpfades auf der Empfangsseite des betreffenden Knotens vom Ausgang des Sternkopplers bis zu den Eingangsklemmen der Komparatorstufe berücksichtigt ist, und daß eine zweite Abgleichphase vorgesehen ist, in der alle Pegelabgleicheinrichtungen ($P_1...P_n$) nacheinander einen Prozeß zum Einstellen des Sendepegels des eigenen Senders so durchführen, daß die ausgesendete Lichtleistung an dem eigenen Empfänger zu der als niedrigste registrierten Empfangsleistung führt, wodurch die Summe aller Dämpfungsanteile des Signalpfades auf der Sendeseite des betreffenden Knotens von den Ausgangsklemmen der Sendestromquelle bis zu dem Eingang des Sternkopplers berücksichtigt ist, wodurch der Sendepegel jedes der n Knoten ($K_1...K_n$) in dem lokalen Netz an dem ihm zugeordneten Eingang des Sternkopplers den gleichen Wert wie alle anderen Sendepegel an den betreffenden anderen Eingängen hat, so daß für den Fall, daß im Normalbetrieb des lokalen Netzes zwei oder mehr Knoten (K) gleichzeitig ein Informationssignal in den optischen Bus einspeisen, der zumindest zweifache Wert des normierten Sendepegels auftritt, der durch den Knoten jeweils individuell zugeordnete Kollisionskomparatoren erfaßt wird, wodurch der Zustand einer Kollision bei allen Knoten ($K_1...K_n$) erkannt wird und ein an sich bekannter Kollisionsentflechtungs-Algorithmus initiiert wird.

**2.** Verfahren nach Anspruch 1,
**dadurch gekennzeichnet,**
daß für den Fall, daß zumindest in einem Knoten (z. B` $K_1$) ein Kriterium für einen Pegelabgleich entsteht, dieser Knoten ($K_1$) mittels seines elektrooptischen Senders ($S_1$) einen von den Impulsen des Nutzdatenflusses unterscheidbar längeren Lichtimpuls als Abgleichanforderungssignal in das Bussystem einspeist, das jeden anderen Knoten ($K_2...K_n$) auffordert, den Normalbetriebszustand zu unterbrechen und in einen Abgleichzustand zu treten und damit bei diesen Knoten ($K_2...K_n$) und bei sich selbst die Grundphase einzuleiten, daß in der Grundphase in allen Knoten ($K_2...K_n$) vorbereitend bis zum Ende des Abgleichanforderungssignals der digital einstellbare Sendepegel und die digital einstellbare Referenzspannung auf ihren jeweiligen Maximalwert eingestellt werden, daß in allen Knoten ($K_1...K_n$) ein für einen Zähl-Algorithmus vorgesehener, durch ein Zeitglied gesteuerter, freilaufender Zähler und dieses Zeitglied auf Null gesetzt werden, daß mit Beendigung des Abgleichanforderungssignals die Grundphase beendet wird und synchron bei allen Knoten ($K_1...K_n$) die erste Abgleichphase beginnt, in der das freilaufende Zählen des Zählers gestartet wird, in der jeder vorhandene Knoten ($K_1...K_n$) abhängig von einer ihm individuell zugeteilten Knotennummer und bei dieser Knotennummer entsprechendem Zählstand des Zählers, nämlich bei Koinzidenz von Zählstand und Knotennummer, seinen maximalen Sendepegel zeitlich getrennt von den Lichtimpulsen aller anderen Knoten über das optische Bussystem allen anderen Knoten als Abgleichimpuls anbietet, daß mit Eintreffen des Abgleichimpulses das freilaufende Zählen unterbrochen und das Zeitglied rückgesetzt wird, daß während der Impulsdauer bei allen Knoten einschließlich des Knotens, der den Abgleichimpuls sendet, gleichzeitig die Referenzspannung auf den jeweils niedrigsten, individuell unterschliedlichen Empfangspegel eingestellt wird, daß mit Ende des Abgleichimpulses das freilaufende Zählen wiedergestartet wird, daß in jedem der Knoten ($K_1...K_n$) eine feste Information über die maximal mög-liche Knotenanzahl, vorzugsweise gleich der Anzahl der Ein-/Ausgänge des Sternkopplers (SK), gespeichert ist, daß bei Koinzidenz des Zählstandes mit dieser Information in jedem Knoten ($K_1...K_n$) ein Kriterium entsteht, mittels dessen die erste Abgleichphase beendet und die zweite Abgleichphase eingeleitet wird, in der die Steuervorgänge für den Zähler und das Zeitglied wie in der ersten Abgleichphase ablaufen, daß während des Abgleichimpulses der eigene Sendepegel derart an den Wert der in der ersten Abgleichphase individuell abgespeicherten Referenzspannung angepaßt wird, daß der Empfangspegel des den Abgleichimpuls sendenden Knotens (z. B. $K_2$) gleich dessen individuell abgespeicherter Referenzspannung wird, daß die zweite Abgleichphase in derselben Weise wie die erste Abgleichphase beendet wird und daß nun alle Knoten ($K_1...K_n$) von dem Abgleichzustand in den Normalbetriebszustand zurückschalten.

**3.** Verfahren nach Anspruch 1,
**dadurch gekennzeichnet,**
daß jeweils ein Nutzdatenpaket von zwei langen Lichtimpulsen eingerahmt ist, wobei diese Lichtimpulse länger als die Periodendauer der für die verwendete Codierungsart notwendigen Synchronisationsvorgänge für die Nutzinformation sind, so daß eine auftretende Kollision sicher erkannt wird.

**4.** Verfahren nach Anspruch 2,
**dadurch gekennzeichnet,**
daß die Impulslänge des Abgleichanforderungssignals variiert wird, um unterschiedliche Sondersignale zusätzlich zu dem Abgleichanforderungssignal zu übertragen.

**5.** Verfahren nach Anspruch 2,
**dadurch gekennzeichnet,**
daß die Impulslänge des Abgleichanforderungssignals gleich der des Abgleichimpulses ist.

**6.** Verfahren nach Anspruch 2,
**dadurch gekennzeichnet,**
daß der für die Abgleichvorgänge erforderliche Algorithmus individuell in jedem der Knoten ($K_1...K_n$) in Form von Firmware realisiert ist.

**7.** Verfahren nach Anspruch 2,
**dadurch gekennzeichnet,**
daß die Knotennummer und die Information über die maximale Knotenanzahl in der Inbetriebnahmephase des lokalen Netzes oder bei Änderungsmaßnahmen für neu hinzukommende Knoten ($K_{n+1}...$) jedem der Knoten individuell, z. B. über einen Wartungskanal, eingegeben werden.

**8.** Verfahren nach Anspruch 2,
**dadurch gekennzeichnet,**
daß die Knotennummer und/oder die Information über die maximale Knotenzahl bei dem sich in Betrieb befindlichen lokalen Netz durch Nutzdatenpakte von jedem beliebigen Knoten aus in jedem der Knoten geändert werden können.

**9.** Verfahren nach Anspruch 2,
**dadurch gekennzeichnet,**
daß in jedem Knoten ($K_1...K_n$) des lokalen Netzes Information über die aktuelle Netzkonfiguration, nämlich die maximale Knotenanzahl und die in diesem Bereich an Knoten vergebene Knotennummern, für jeden Knoten abrufbar gespeichert ist.

**Claims**

**1.** Method for automatic level calibration in a local area network, preferably for a multiprocessor arrangement, comprising a bus system with optical waveguides and an optical star coupler (SK), for setting a normalised level at all inputs of this star coupler for the purpose of collision detection, in which method the information signal to be transmitted is converted by an electrooptical transmitter into a light signal and the latter is coupled into an optical waveguide, the light signal transmitted via optical waveguides being converted by an opto-electrical receiver into a useful electrical signal and from the latter the information signal being recovered, for each node ($K_1...K_n$), for example a processor, in each case one transmitter (S) being provided, the light power of which, which is coupled into the optical waveguide and depends on the information signal, can be changed in digital steps, and for each node ($K_1...K_n$) in each case a receiver (E) being provided which is constructed of direct-current-coupled amplifiers without gain control and which exhibits an input stage for-generating the useful signal, a first comparator stage for generating the information signal from the useful signal and a second comparator stage which is supplied with a reference voltage which can be changed in digital steps, which samples the level of the useful signal and delivers a collision signal when the useful signal exceeds the reference voltage, characterised in that when a level calibration is required for the local area network, a process is run in such a manner that a basic phase is provided in which in all nodes ($K_1...K_n$), level calibration devices ($P_1...P_n$) in each case individually associated with these nodes are synchronised with one another, in that a first calibration phase following the basic phase is provided in which in each case each node transmits with the maximum level set in the basic phase and in which all level calibration devices ($P_1...P_n$) simultaneously carry out a process for setting the reference voltage to the lowest received level, by means of which the sum of all attenuation components of the signal path on the receiving side of the relevant node from the output of the star coupler to the input terminals of the comparator stage is taken into consideration, and in that a second calibration phase is provided in which all level calibration devices ($P_1...P_n$) successively carry out a process for setting the transmitting level of their own transmitter in such a manner that the emitted light power leads to the received power registered as the lowest one at their own receiver, by means of which the sum of all attenuation components of the signal path on the transmitting side of the relevant node from the·output terminals of the transmitting current source to the input of the star coupler is taken into consideration, as a result of

11

which the transmitting level of each of the n nodes ($K_1...K_n$) in the local area network has at its associated input of the star coupler the same value as all other transmitting levels at the relevant other inputs so that for the case where, in normal operation of the local area network, two or more nodes (K) simultaneously feed an information signal into the optical bus, at least twice the value of the normalised transmitting level occurs which is detected by collision comparators in each case individually associated with the nodes, by means of which the state of a collision is detected at all nodes ($K_1...K_n$) and a collision resolution algorithm known per se is initiated.

2. Method according to Claim 1, characterised in that in the case where a criterion for a level calibration arises at least in one node (for example $K_1$), this node ($K_1$) feeds by means of its electro-optical transmitter ($S_1$) a light pulse, which is distinguishably longer than the pulses of the useful-data flow, as calibration request signal into the bus system, which requests every other node ($K_2...K_n$) to interrupt the normal operating state and enter a calibration state and thus to initiate the basic phase at these nodes ($K_2...K_n$) and at itself, in that in the basic phase in all nodes ($K_1...K_n$), the digitally adjustable transmitting level and the digitally adjustable reference voltage are set, in preparation to their respective maximum value up to the end of the calibration request signal, in that in all nodes ($K_1...K_n$), a free-running counter, controlled by a timing section and provided for a counting algorithm, and this timing section are set to zero, in that, when the calibration request signal has ended, the basic phase is ended and synchronously the first calibration phase begins at all nodes ($K_1...K_n$), in which the free-running counting of the counter is started, in which every existing node ($K_1...K_n$) offers, in dependence on a node number allocated to it individually and with a count of the counter corresponding to this node number, namely with coincidence of count and node number, its maximum transmitting level separated in time from the light pulses of all other nodes via the optical bus system as calibration pulse to all other nodes, in that with the arrival of the calibration pulse, the free-running counting is interrupted and the timing section is reset, in that during the pulse period the reference voltage is simultaneously set at all nodes including the node which is transmitting the calibration pulse, to the in each case lowest individually different receiving level, in that with the end of the calibration pulse the free-running counting is restarted, in that in each of the nodes ($K_1...K_n$) a fixed information on the maximum possible number of nodes, preferably equal to the number of inputs/outputs of the star coupler (SK), is stored, in that with coincidence of the count with this information in each node ($K_1...K_n$) a criterion is produced by means of which the first calibration phase is ended and the second calibration phase is initiated, in which the control processes for the counter and the timing section proceed as in the first calibration phase, in that during the calibration pulse, its own transmitting level is matched to the value of the reference voltage individually stored in the first calibration phase, in such a manner that the receiving level of the node (for example K2) transmitting the calibration pulse becomes equal to its individually stored reference voltage, in that the second calibration phase is ended in the same manner as the first calibration phase and in that now all nodes ($K_1...K_n$) switch back from the calibration state to the normal operating state.

3. Method according to Claim 1, characterised in that in each case one useful-data packet is framed by two long light pulses, these light pulses being longer than the duration of the period of the synchronisation processes for the useful information, necessary for the coding type used, so that a collision occurring is reliably detected.

4. Method according to Claim 2, characterised in that the pulse length of the calibration request signal is varied in order to transmit different special signals in addition to the calibration request signal.

5. Method according to Claim 2, characterised in that the pulse length of the calibration request signal is equal to that of the calibration pulse.

6. Method according to Claim 2, characterised in that the algorithm required for the calibration processes is individually implemented in the form of firmware in each of the nodes ($K_1...K_n$).

7. Method according to Claim 2, characterised in that the node number and the information on the maximum number of nodes are individually input to each of the nodes, for example via a maintenance channel, during the commissioning phase of the local area network or during modification measures for newly added nodes ($K_{n+1}...$).

8. Method according to Claim 2, characterised in that the node number and/or the information on the maximum number of nodes can be changed in each of the nodes from any arbitrary node by means of useful-data packets in the operational local area network.

9. Method according to Claim 2, characterised in that information on the current network configuration, namely the maximum number of nodes and the node numbers issued to nodes in this area, is retrievably stored for each node in each node ($K_1...K_n$) of the local area network.

**Revendications**

1. Procédé de réglage automatique de niveau dans un réseau local, notamment pour un dispositif à ordinateurs multiples, comportant un système formant bus comportant des guides d'ondes optiques et un coupleur optique en étoile (SK), pour le réglage d'un niveau normalisé à toutes les entrées de ce coupleur en étoile pour l'identification de collisions, et selon lequel le signal d'information devant être transmis est converti par un émetteur électro-optique en un signal lumineux et ce signal est injecté par couplage dans un guide d'ondes optiques, et selon lequel le signal lumineux transmis par le guide d'ondes optiques est converti par un récepteur optoélectrique en un signal électrique utile et le signal d'information est récupéré à partir de ce signal, et selon lequel pour chaque noeud ($K_1...K_n$), notamment un ordinateur, il est prévu respectivement un émetteur (S), dont la puissance lumineuse, qui est injectée dans le guide d'ondes optiques et dépend du signal d'information, peut être modifiée selon des pas numériques, et selon lequel pour chaque noeud ($K_1...K_{n)}$, il est prévu respectivement un récepteur (E), qui est constitué par des amplificateurs couplés en courant continu, sans régulation de l'amplification et possède un étage d'entrée servant à produire le signal utile, un premier étage comparateur servant à produire le signal d'information à partir du signal utile et un second étage comparateur, auquel est envoyée une tension de référence, modifiable selon des échelons numériques, et qui explore le niveau du signal utile et délivre un signal de collision lorsque le signal utile dépasse la tension de référence,
caractérisé par le fait
que dans le cas d'un réglage nécessaire du niveau pour le réseau local, on met en oeuvre un processus selon lequel il est prévu une phase de base, lors de laquelle dans tous les noeuds ($K_1...K_n$), les dispositifs de réglage de niveau ($P_1...P_n$) associés individuellement à ces noeuds sont synchronisés les uns sur les autres, il est prévu une première phase de réglage qui succède à la phase de base et pendant laquelle une émission est réalisée respectivement par chaque noeud ayant le niveau maximum réglé pendant la phase de base et pendant laquelle simultanément tous les dispositifs de réglage de niveau ($P_1...P_n$) exécutent un processus pour régler la tension de référence sur le niveau reçu le plus faible, ce qui prend en compte la somme de toutes les composantes d'affaiblissement de la voie de transmission des signaux sur le côté réception du noeud considéré, depuis la sortie du coupleur en étoile jusqu'aux bornes d'entrée de l'étage comparateur, et il est prévu une seconde phase de réglage, pendant laquelle tous les dispositifs de réglage de niveau ($P_1...P_n$) exécutent successivement un processus pour régler le niveau d'émission de l'émetteur proprement dit de sorte que la puissance lumineuse émise conduit, dans le récepteur proprement dit, à la puissance de réception enregistrée comme étant la plus faible, ce qui prend en compte la somme de toutes les composantes d'affaiblissement du noeud considéré depuis la borne de sortie de la source du courant d'émission jusqu'à l'entrée du coupleur en étoile, le niveau d'émission de chacun des n noeuds ($K_1...K_n$) du réseau local ayant, à l'entrée du coupleur en étoile qui lui est associé, la même valeur que les autres niveaux d'émission présents sur les autres entrées considérées, de sorte que dans le cas où, lors du fonctionnement normal du réseau local, deux ou un plus grand nombre de noeuds (K) envoient simultanément un signal d'information dans le bus optique, il apparaît une valeur égale au moins au double de la valeur du niveau d'émission normalisé, qui est détectée par des comparateurs de collisions respectivement associés individuellement aux noeuds, ce qui permet d'identifier l'état d'une collision dans tous les noeuds ($K_1...K_n$) et de déclencher un algorithme connu en soi d'élimination des collisions.

2. Procédé suivant la revendication 1, caractérisé par le fait que dans le cas où il apparaît, dans au moins un noeud ($K_1$), un critère pour un réglage de niveau, ce noeud ($K_1$) envoie dans le système formant bus, au moyen de son émetteur électro-optique ($S_1$), une impulsion lumineuse, possédant une plus grande longueur, pouvant être distinguée, que celle des impulsions du flux de données utiles, en tant que signal de demande de réglage, qui demande à chaque autre noeud ($K_2...K_n$) d'interrompre l'état de fonctionnement normal et de passer dans un état de réglage et de déclencher par conséquent dans ces noeuds (K₂...Kₙ), et en lui-même, la phase de base, que pendant la phase de base dans tous les noeuds (K₁...Kₙ), le niveau d'émission réglable numériquement et la tension de référence réglable numériquement sont réglés sur leurs valeurs maximales respectives à titre préparatoire jusqu'à la fin du signal de demande de réglage, que dans tous les noeuds (K₁...Kₙ), un compteur réalisant un comptage libre, prévu pour un algorithme de comptage et commandé par une minuterie, et cette minuterie sont positionnés à zéro, qu'à la fin du signal de demande de réglage, la phase de base est terminée et qu'en synchronisme commence, dans tous les noeuds (K₁...Kₙ), la première phase de réglage, pendant laquelle le comptage libre du compteur est déclenché et pendant laquelle chaque noeud présent (K₁...Kₙ) envoie, d'une manière séparée dans le temps par rapport aux impulsions lumineuses de tous les autres noeuds, son niveau d'émission maximum en tant qu'impulsion de réglage à tous ces autres noeuds par l'intermédiaire du système formant bus optique, en fonction d'un numéro affecté individuellement aux noeuds et d'un état du compteur, qui correspond à ce numéro de noeud, c'est-à-dire lors d'une coïncidence entre l'état de comptage et le numéro du noeud, que lors de l'apparition de l'impulsion de réglage, le comptage libre est interrompu et la minuterie est ramenée à zéro, que pendant la durée de l'impulsion, la tension de référence est réglée simultanément sur le niveau de réception respectif le plus faible, qui diffère pour les différents noeuds, et ce dans tous les noeuds y compris le noeud qui émet l'impulsion de réglage, qu'à la fin de l'impulsion de réglage, le comptage libre redémarre, que dans chacun des noeuds (K₁...Kₙ) est mémorisée une information fixe concernant le nombre maximum possible de noeuds, qui est égal de préférence au nombre des entrées/sorties du coupleur en étoile (SK), qu'en cas de coïncidence de l'état de comptage avec cette information, il apparaît dans chaque noeud (K₁...Kₙ) un critère qui arrête la première phase de réglage et déclenche la seconde phase de réglage, pendant laquelle les opérations de commande pour le compteur et la minuterie se déroulent comme lors de la première phase de réglage, que pendant l'impulsion de réglage, le niveau particulier d'émission est adapté à la valeur de la tension de référence mémorisée individuellement pendant la première phase de réglage, de telle sorte que le niveau de réception du noeud (par exemple K₂), qui émet l'impulsion de réglage, est égal à la tension de référence, mémorisée individuellement, de ce noeud, que la seconde phase de réglage est interrompue de la même manière que la première phase de réglage et que tous les noeuds (K₁...Kₙ) sont commutés en retour de l'état de réglage à l'état de fonctionnement normal.

3. Procédé suivant la revendication 1, caractérisé par le fait que respectivement un paquet de données utiles est enserré entre deux longues impulsions lumineuses, ces dernières étant d'une durée supérieure à la durée de la période des opérations de synchronisation, nécessaires pour le type de codage utilisé, pour l'information utile, de sorte qu'une collision apparaissante est identifiée de façon sûre.

4. Procédé suivant la revendication 2, caractérisé par le fait que la durée des impulsions du signal de demande de réglage est modifiée pour permettre la transmission de signaux particuliers différents, en plus du signal de demande de réglage.

5. Procédé suivant la revendication 2, caractérisé par le fait que la durée des impulsions du signal de demande de réglage est égale à celle de l'impulsion de réglage.

6. Procédé suivant la revendication 2, caractérisé par le fait que l'algorithme nécessaire pour les opérations de réglage est mis en oeuvre individuellement dans chacun des noeuds (K₁...Kₙ) sous la forme d'un progiciel.

7. Procédé suivant la revendication 2, caractérisé par le fait que le numéro d'un noeud et l'information concernant le nombre maximum de noeuds dans la phase de mise en service du réseau local ou lors de dispositions de modification pour des noeuds (Kₙ₊₁...) nouvellement ajoutés sont introduits individuellement dans chacun des noeuds, par exemple au moyen d'un canal de maintenance.

8. Procédé suivant la revendication 2, caractérisé par le fait que le numéro d'un noeud et/ou l'information concernant le nombre maximum de noeuds dans le réseau local en fonctionnement peuvent être modifiés dans chacun des noeuds par des paquets de données utiles à partir de chaque noeud.

9. Procédé suivant la revendication 2, caractérisé par le fait que dans chaque noeud (K₁...Kₙ) du réseau local, une information concernant la configuration actuelle du réseau est mémorisée dans chaque

noeud ($K_1...K_n$) de manière à pouvoir être appelée pour chaque noeud, c'est-à-dire le nombre maximum de noeuds et les numéros des noeuds affectés aux noeuds dans cette zone.

# FIG 1

# FIG2

| 11 Bit Dauerlicht | Datenpaket | 20 Bit Dauerlicht |

Bus belegen

Beginn Datenübertragung

Ende Datenübertragung

Bus frei= geben

Paketanfang

Paketende

für Kollisions= erkennung

Datenübertragung

Kollisionserkennung

# FIG 3

normierter Pegel       Unsymmetrie < 2 dB

erforderlicher Abgleich
     beim Sender:        Sendepegel
     beim Empfänger:    Referenzschwelle

Referenzschwelle

2 dB ≙ Faktor 1,6

# FIG 4

---analog  — digital

# FIG 5

# FIG 6

Pegel

DATEN

DATEN+ABGLEICHWUNSCH

ABGLEICHWUNSCH

t

a) Lichtpegel

Spannung

t

b) Eingänge des Abgleichkomparators A

Spannung

ABGLEICH

ABGLEICH

t

c) Ausgang des Abgleichkomparators A

FIG 7

# FIG 8

ABGLEICH

| STEUERUNG | | |
|---|---|---|
| N eigener Impuls? | | J |
| | Mindestpause | |
| | Impuls senden: START TIMER | |
| | STEUERUNG | |
| N waren alle Knoten 2 x dran? | | J |
| | time out stoppen | |
| | Steuerleitungen NACHFÜHREN, EINSTELLEN : = AUS | |
| | Zähler : = 0 | |

STEUERUNG

| Weiterzählen | | |
|---|---|---|
| WHILE Impulsende | | |
| | Port abfragen | |
| time out starten, rücksetzen | | |
| N Zähler: = 1 ? | | J |
| | Phase Nachführen Steuerleitung Nachführen: = EIN | |
| N Zähler: = max. Knotennr. + 1 ? | | J |
| | Phase Einstellen Steuerleitung Nachführen: = AUS Steuerleitung Einstellen: = EIN | |